Europäisches Patentamt

(19) European Patent Office

Office européen des brevets

(11) Numéro de publication: **0 245 159**
**B1**

(12) **FASCICULE DE BREVET EUROPEEN**

(45) Date de publication du fascicule du brevet: **05.09.90**

(21) Numéro de dépôt: **87400985.5**

(22) Date de dépôt: **29.04.87**

(51) Int. Cl.⁵: **G 01 F 23/36, G 01 F 23/00**

(54) **Dispositif de mesure de la quantité totale de liquide contenue dans deux réservoirs.**

(30) Priorité: **30.04.86 FR 8606295**

(43) Date de publication de la demande:
**11.11.87 Bulletin 87/46**

(45) Mention de la délivrance du brevet:
**05.09.90 Bulletin 90/36**

(84) Etats contractants désignés:
**DE ES FR GB IT**

(56) Documents cités:
**DE-A-2 649 580      US-A-3 586 988**
**DE-A-3 409 258      US-A-3 725 804**
**FR-A-1 394 913**

**SIEMENS ZEITSCHRIFT, vol. 45, no. 4, avril 1971,**
**pages 253-255, Munich, DE; D. HAUSEN et al.:**
**"Eine Reihe direktgekoppelter**
**Gleichspannungs-Messverstärker"**

**PATENT ABSTRACTS OF JAPAN, vol 2, no. 139,**
**17 novembre 1978, page 8585 E 78; JP-A-53 105**
**962 (NIPPON DENSO K.K.) 14-09-1978**

(73) Titulaire: **JAEGER**
**2, rue Baudin**
**F-92303 Levallois-Perret (FR)**

(72) Inventeur: **Huynh Tan Duc**
**1 Passage Iphigenie**
**Noisiel cedex 157 F-77420 Champs S/Marne (FR)**

(74) Mandataire: **Bloch, Gérard et al**
**2, square de l'Avenue du Bois**
**F-75116 Paris (FR)**

Courier Press, Leamington Spa, England.

## Description

La présente invention a pour objet un dispositif de mesure de la quantité totale de liquide contenue dans deux réservoirs, comprenant:

dans chaque réservoir, un potentiomètre à résistance pourvu d'une première borne reliée à une des deux extrémités de la résistance, d'une deuxième borne reliée à l'autre extrémité de la résistance et d'une troisième borne reliée au curseur du potentiomètre, ledit curseur étant solidaire d'un flotteur et l'ensemble étant agencé pour que la valeur de la portion de la résistance entre ladite première borne et ladite troisième borne soit proportionnelle à la quantité de liquide dans ledit réservoir,

des moyens pour faire circuler dans chaque résistance un courant déterminé, et

des moyens pour traiter les différences de potentiel entre chaque dite première borne et chaque dite troisième borne, et pour délivrer un signal de mesure unique, représentatif de la quantité totale de liquide mesurée.

Un dispositif de ce type est utilisé par exemple pour la mesure de la quantité totale de carburant pour un véhicule automobile pourvu de deux réservoirs. En effet, pour des raisons d'encombrement, il est de plus en plus fréquent de concevoir des véhicules automobiles dans lesquels le carburant, au lieu d'être contenu dans un unique réservoir de volume relativement important, est réparti dans deux réservoirs de volumes plus faibles, donc plus faciles à loger sens empiéter trop sur le volume utile réservé aux passagers ou aux bagages.

Pour mesurer la quantité totale de liquide contenue dans les deux réservoirs, un homme de métier peut mettre au point un dispositif dérivé des dispositifs connus dans le cas d'un unique réervoir. Un tel dispositif est par exemple décrit dans DE—A—3 409 258. Dans ce cas, les moyens pour faire circuler dans chaque résistance un courant déterminé comprennent une source de courant par résistance. Une borne de chaque source de courant est reliée à la masse électrique du véhicule, de même que les premières bornes de chacun des potentiomètres. L'autre borne de chaque source de courant est reliée à la deuxième borne du potentiomètre correspondant. Ainsi, la différence de potentiel entre la première borne et la troisième borne du potentiomètre d'un réservoir est proportionnelle à la quantité de carburant dans ce réservoir. Les moyens pour traiter les différences de potentiel comprennent un sommateur analogique de ces deux différences de potentiels, suivi d'un circuit de conversion de type connu pour délivrer le signal de mesure.

Un tel dispositif présente l'inconvénient de mettre en oeuvre deux sources de courant qui doivent délivrer constamment deux courants de même valeur, ainsi qu'un sommateur analogique. Ces éléments doivent donc être soumis à un réglage éventuel, ou réalisés avec des composants de précision. Dans les deux cas, il en résulte un coût de fabrication plus élevé, et, compte tenu des possibilités de dérive et de défaillance de ces éléments, une précision et une fiabilité réduites du dispositif.

On connaît aussi, par la demande allemande N° DE—A—2 649 580, un dispositif voisin du dispositif ci-dessus, pour mesurer la quantité totale de carburant contenu dans un réservoir constitué de deux compartiments qui communiquent.

Ce dispositif comprend, dans chaque réservoir, un potentiomètre, dont le curseur est solidaire d'un flotteur, et agencé pour que la valeur de la portion de résistance entre le curseur et une des extrémités de la résistance varie dans le même sens que la quantité de liquide dans le réservoir correspondant. Les deux extrémités mentionnées des deux résistances sont reliées entre elles, de façon à ce que les valeurs des deux portions mentionnées de résistance s'ajoutent. Ainsi, leur somme varie dans le même sens que la quantité totale de liquide dans les deux réservoirs. La tension de la batterie du véhicule est appliquée à un circuit comprenant en série un instrument indicateur et la somme des deux portions de résistance. Les deux réservoirs étant communicants, les deux flotteurs sont disposés de façon à ce que, lors d'un virage, ou lors d'une accélération, ou encore lors d'un freinage, du véhicule, le déplacement du liquide d'un réservoir dans l'autre soit sans influence sur l'indication du niveau, une élévation de position de l'un des flotteurs étant compensée par la baisse de position de l'autre flotteur. Ainsi, un tel dispositif procure une indication du niveau indépendante de la position et des déplacements du véhicule. Toutefois, avec un tel agencement, il est impossible de déterminer une loi de variation de chaque portion de résistance, en fonction du niveau de liquide dans le réservoir correspondant, qui permette d'obtenir, aux bornes de l'instrument indicateur, une tension proportionnelle à la quantité totale de carburant dans les deux réservoirs. Il est donc nécessaire de prévoir un cirucit électronique de linéarisation, si l'on souhaite obtenir une indication proportionnelle à la quantité totale de carbùrant, ce qui est en général le cas. Un tel circuit de linéarisation augmente le coût du dispositif, d'autant qu'il doit être adapté, de façon spécifique, à chacun des types de véhicule sur lequel le dispositif doit être installé.

La présente invention vise à pallier ces inconvénients en procurant un dispositif mettant en oeuvre un nombre réduit de composants, nécessitant un nombre réduit de réglages, et pouvant être utilisé sans modifications sur de nombreux types de véhicules.

A cet effet, elle a pour objet un dispositif du type défini ci-dessus, caractérisé par le fait que:

lesdits moyens pour faire circuler un courant comprennent une unique source de courant pourvue d'une première borne reliée à une masse électrique ainsi qu'à la deuxième borne du premier potentiomètre, et d'une deuxième borne reliée à la deuxième borne du deuxième potentiomètre, les deux premières bornes des deux potentiomètres étant reliées entre elles, et

lesdits moyens pour traiter les différences de potentiel et pour délivrer ledit signal de mesure comprennent un circuit de conversion de la différence de potentiel entre les deux troisièmes bornes des deux potentiomètres.

Le dispositif de l'invention met en oeuvre une seule source de courant, et ne nécessite aucun sommateur analogique.

Selon une réalisation particulière du dispositif, ledit circuit de conversion est pourvu d'un accès d'entrée du type dissymétrique entre une borne d'entrée et une borne de référence dont le potentiel sert de référence pour l'alimentation en énergie électrique du circuit de conversion, ladite borne d'entrée est reliée à la troisième borne du deuxième potentiomètre et ladite borne de référence est reliée à la troisième borne du premier potentiomètre par l'intermédiaire d'un circuit suiveur.

L'amplificateur utilisé est du même type de celui utilisé pour les dispositifs à un seul réservoir. Le dispositif de l'invention ne nécessite donc pas de composants spéciaux.

Selon une autre réalisation, un premier condensateur est monté entre les deux troisièmes bornes des deux potentiomètres, et un deuxième condensateur est monté entre la troisième borne du premier potentiomètre et ladite masse.

Lorsque, sous l'action des mouvements parfois brusques auquel est soumis le véhicule, un des curseurs s'écarte, pour un bref intervalle de temps, de la résistance du potentiomètre auquel il appartient, le potentiel sur la troisième borne ne passe pas à zéro, mais reste sensiblement constant, grâce aux condensateurs.

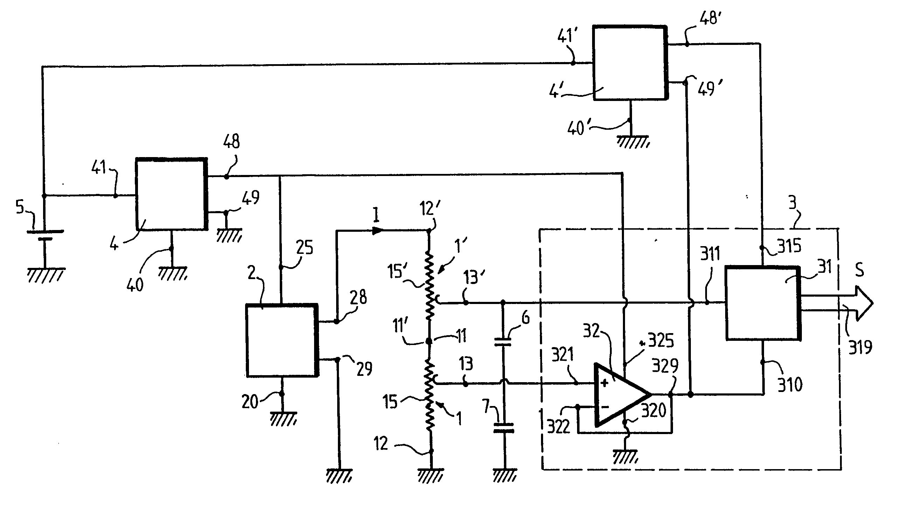

La présente invention sera mieux comprise grâce à la description suivante de la forme de réalisation préférée du dispositif de l'invention, faite en se référent au dessin annexé, sur lequel l'unique figure représente un schéma, par blocs, du dispositif de l'invention.

En référence à l'unique figure, un dispositif de mesure de la quantité totale de carburant contenue dans les deux réservoirs d'un véhicule automobile comprend deux potentiomètres 1 et 1' disposés chacun dans un des deux réservoirs.

Le potentiomètre 1, disposé dans le premier réservoir, comprend une résistance 14, accessible par une première borne 11 et une deuxième borne 12, ces deux bornes étant reliées à ses deux extrémités, et un curseur, accessible par une troisième borne 13, pouvant se déplacer sur la résistance. La résistance 15 est ici réalisée en fil fin bobiné. Le curseur est, de façon connue, solidaire d'un flotteur disposé à l'intérieur du réservoir et non représenté car classique.

Le bobinage de la résistance 15 est, également de façon connue, adapté à la forme du réservoir, et au mouvement du flotteur, de façon telle que la portion de la résistance 15 comprise entre la première borne 11 et la troisième borne 13 est proportionnelle à la quantité de carburant dans le premier réservoir. Le facteur de proportionnalité est ici de 5 ohms par litre.

Le potentiomètre 1', installé dans le deuxième réservoir, est agencé de façon identique. La résistance 15' de ce potentiomètre est accessible par une première borne 11' et une deuxième borne 12'. Le curseur est accessible par une troisième borne 13'. Bien que le deuxième réservoir soit en général de forme différente de celle du premier réservoir, le bobinage de la résistance 15' est adapté à la forme du réservoir de façon telle que la portion de la résistance 15' comprise entre la première borne 11' et la troisième borne 13' est proportionnelle à la quantité de carburant dans le deuxième réservoir, avec le même coefficient de proportionnalité que pour le premier réservoir, égal ici à 5 ohms par litre.

Les deux premières bornes 11 et 11' sont reliées entre elles, de façon à ce que les résistances 15 et 15' se trouvent en série. La deuxième borne 12 du premier potentiomètre est reliée à la masse électrique du véhicule, et la deuxième borne 12' du deuxième potentiomètre est reliée à une borne de sortie 28 d'une source de courant 2, dont l'autre borne de sortie 29 est reliée à la masse.

La source de courant 2 est ici réalisée à l'aide d'un circuit classique, bien connu de l'homme de métier, et alimenté en énergie électrique entre une borne d'alimentation 25 et une borne de référence 20, reliée à la masse.

Un premier régulateur de tension 4 est pourvu d'un accès d'entrée entre une borne d'entrée 41 et une borne de référence 40, reliée à la masse et d'un accès de sortie entre deux bornes de sorties 48 et 49, dont l'une 48 est reliée à la borne d'alimentation 25 de la source 2 et l'autre 49 est reliée à la masse. La borne d'entrée 41 du premier régulateur 4 est reliée au pôle plus de la batterie 5 du véhicule, dont le pôle moins est relié à la masse.

Un premier condensateur 6 est monté entre la troisième borne 13 et la troisième borne 13', tandis qu'un deuxième condensateur 7 est monté entre la troisième borne 13 et la masse.

Un circuit de traitement, schématisé par le bloc 3 de la figure, comprend un circuit suiveur 32 et un circuit de conversion 31, et délivre un signal de mesure S, représentatif de la quantité totale de carburant.

Le circuit suiveur 32 est ici un amplificateur opérationnel pourvu d'un accès d'alimentation entre une borne d'alimentation 325 et une borne de référence 320, reliée à la masse, d'un accès d'entrée de signal du type symétrique entre une borne d'entrée plus 321, une borne d'entrée moins 322 et la borne de référence 320, et d'un accès de sortie de signal du type dissymétrique entre une borne de sortie 329 et la borne de référence 320. De façon connue, la borne d'entrée moins 322 est reliée à la borne de sortie 329. La borne d'entrée plus 321 est reliée à la troisième borne 13 du premier potentiomètre 1. La borne d'alimentation 325 est reliée à la borne de sortie 48 du premier régulateur 4.

Le circuit de conversion 31 est pourvu d'un accès d'alimentation entre une borne d'alimentation 315 et une borne de référence 310, d'un accès d'entrée de signal du type dissymétrique entre une borne d'entrée 311 et la borne de référence 310, et d'un accès de sortie de signal, schématisé ici par un bus 319 délivrant le signal S, pour commander ici un dispositif d'affichage non représenté car classique.

Un deuxième régulateur de tension 4' est pourvu d'un accès d'entrée entre une borne d'entrée 41', reliée au pôle plus de la batterie 5, et une borne de référence 40', reliée à la masse, et d'un accès de sortie entre deux bornes de sortie 48' et 49', dont l'une 48' est reliée à la borne d'alimentation 315 du circuit de conversion 31 et l'autre 49' est reliée à la borne de référence 310 du circuit de conversion 31.

Le circuit qui vient d'être décrit fonctionne comme suit.

La source de courant 2 fait circuler un courant I dans les résistances 15 et 15'. Comme la portion de résistance 15' entre la troisième borne 13' et la première borne 11' du deuxième potentiomètre 1' est proportionnelle à la quantité de carburant dans le deuxième réservoir, et comme la portion de résistance 15 entre la première borne 11 et la troisième borne 13 du premier potentiomètre 1 est proportionnelle à la quantité de carburant dans le premier réservoir, et que, ces deux portions étant montées en série, leurs valeurs s'ajoutent, la différence de potentiel développée, par le passage du courant I, entre la troisième borne 13' et la troisième borne 13 est proportionnelle à la quantité totale de carburant dans les deux réservoirs.

Cette différence de potentiel est appliquée à l'entrée du circuit de conversion 31, qui la convertir, de façon connue, en le signal de mesure S. Il est à noter que, contrairement à la source de courant 2, et au circuit suivant 32, dont les bornes de référence 20 et 320, respectivement, sont reliées à la masse, le circuit de conversion 31 voit sa borne de référence 310 portée à un potentiel flottant, égal au potentiel développé par le passage du courant I dans la portion de résistance 15 comprise entre la troisième borne 13 et la masse. Le circuit suivant 32 assure l'égalité du potentiel de référence du circuit de conversion 31 et du potentiel de la borne 13 sans dérivation de courant par cette borne 13, puisque l'impédance d'entrée sur la borne d'entré 321 est infinie. De même, l'impédance d'entrée sur la borne d'entrée 311 du circuit de conversion 31 est infinie.

Le premier circuit régulateur 4 délivre une tension d'alimentation régulée de valeur déterminée, ici 5 volts, entre ses bornes de sortie 49 et 48, c'est-à-dire de 5 volts par rapport à la masse, pour l'alimentation de la source de courant 2 et du circuit suivant 32. Le second circuit régulateur 4' délivre ici une tension d'alimentation régulée de 5 volts entre ses bornes de sortie 49' et 48', c'est-à-dire de 5 volts par rapport au potentiel flottant de la borne 13.

Lorsque le véhicule se déplace ou passe sur un cahot, il arrive que les curseurs des potentiomètres 1 et 1' s'écartent des résistances 15 et 15' pendant un bref intervalle de temps. Les condensateurs 6 et 7, qui s'opposent aux variations rapides de différence de potentiel à leurs bornes, évitent que le potentiel sur les troisièmes bornes 13 et 13' ne passe à zéro, et fausse le résultat de la mesure.

Naturellement, le dispositif de l'invention pourrait être utilisé dans le cas où le véhicule n'est pourvu que d'un seul réservoir, en reliant la borne d'entrée 321 à la masse, comme la première borne 11' du deuxième potentiomètre 1', le premier potentiomètre 1 étant supprimé.

Dans la description qui vient d'être faite, on utilise un circuit de conversion 31 pourvu d'un accès d'entrée dissymétrique, rigoureusement identique à celui utilisé traditionnelle dans les dispositifs dont sont pourvus les véhicules à un seul réservoir, et dont la borne de référence 310 est ici porté à un potentiel flottant. Ceci n'est pas obligatoire, et on peut naturellement utiliser un circuit de conversion dont la borne de référence est reliée à la masse, donc portée au potentiel zéro, à condition que le circuit de conversion soit pourvu d'un accès d'entrée symétrique entre deux bornes d'entrée et la borne de référence, reliée à la masse.

Naturellement, il n'est pas obligatoire que les résistances 15 et 15' soient réalisées en fil bobiné, et elles peuvent, par exemple être réalisées par dépôt, sur un support d'une couche résistive de larguer ou d'apaisseur variable pour s'adapter à la forme du réservoir.

**Revendications**

1. Dispositif de mesure de la quantité totale de liquide contenue dans deux réservoirs, comprenant:

un premier (1) et un deuxième (1') potentiometres à savoir, dans chaque réservoir, un potentiomètre respectif (1, 1') à résistance (15, 15') pourvu d'une première borne (11, 11') reliée à une des deux extrémités de la résistance (15, 15'), d'une deuxième borne (12, 12') reliée à l'autre extrémité de la résistance (15, 15') et d'une troisième borne (13, 13') reliée au curseur du potentiomètre (1, 1'), ledit curseur étant solidaire d'un flotteur et l'ensemble étant agencé pour que la valeur de la portion de la résistance entre ladite première borne (11, 11') et ladite troisième borne (13, 13') soit proportionnelle à la quantité de liquide dans ledit réservoir,

des moyens (2) pour faire circuler dans chaque résistance (15, 15') un courant déterminé (I), et,

des moyens (3) pour traiter les différences de potentiel entre chaque dite première borne (11, 11') et chaque dite troisième borne (13, 13'), et pour délivrer un signal de mesure (S) unique, représentatif de la quantité totale de liquide mesurée,

dispositif caractérisé par le fait que:

lesdits moyens pour faire circuler un courant comprennent une unique source de courant (2) pourvue d'une première borne (29) reliée à une masse électrique ainsi qu'à la deuxième borne (12) du premier potentiomètre (1), et d'une deuxième borne (28) reliée à la deuxième borne (12') du deuxième potentiomètre (1'), les deux premières bornes (11, 11') des deux potentiomètres étant reliées entre elles, et

lesdits moyens (3) pour traiter les différences de potentiel et pour délivrer ledit signal de mesure (S) comprennent un circuit de conversion (31) de la différence de potentiel entre les deux troisièmes bornes (13, 13') des deux potentiomètres (1, 1').

2. Dispositif selon la revendication 1 dans lequel ledit circuit de conversion (31) est pourvu d'un accès d'entrée du type dissymétrique entre une borne d'entrée (311) et une borne de référence (310) dont le potentiel sert de référence pour l'alimentation en énergie électrique du circuit de conversion (31), ladite borne d'entrée (311) est reliée à la troisième borne (13') du deuxième potentiomètre (1') et ladite borne de référence (310) est reliée à la troisième borne (13) du premier potentiomètre (1) par l'intermédiaire d'un circuit suiveur (32).

3. Dispositif selon la revendication 2, dans lequel ledit circuit de conversion (31) est alimenté en énergie électrique par l'intermédiaire d'un circuit régulateur de tension (4') pourvu d'un accès d'entrée à deux bornes dont l'une (40') est reliée à ladite masse et l'autre (41') à une borne d'une source (5) d'énergie électrique, dont l'autre borne est relié à ladite masse, et d'un accès de sortie à deux bornes (48', 49') dont l'une (49') est reliée à ladite borne de référence (310) du circuit de conversion (31) et l'autre (48') à la borne d'alimentation (315) du circuit de conversion (31).

4. Dispositif selon l'une des revendications 1 à 3, dans lequel un premier condensateur (6) est monté entre les deux troisièmes bornes (13, 13') des deux potentiomètres (1, 1'), et un deuxième condensateur (7) est monté entre la troisième borne (13) du premier potentiomètre (1) et ladite masse.

**Patentansprüche**

1. Vorrichtung zum Messen der in zwei Behältern enthaltenen gesamten Flüssigkeitsmenge, mit:

einem ersten (1) und einem zweiten (1') Potentiometer, nämlich in jedem Behälter einem jeweiligen Potentiometer (1, 1') mit einem Widerstand (15, 15'), das mit einem ersten Anschluß (11, 11'), der mit einem der beiden Enden des Widerstandes (15, 15') verbunden ist, einem zweiten Anschluß (12, 12'), der mit dem anderen Ende des Widerstandes (15, 15') verbunden ist, und einem dritten Anschluß (13, 13') versehen ist, der mit einem Schieber des Potentiometers (1, 1') verbunden ist, wobei der Schieber mit einem Schwimmer vereinigt ist, und das Ganze so angeordnet ist, daß der Wert des Teiles des Widerstandes zwischen dem ersten Anschluß (11, 11') und dem dritten Anschluß (13, 13') proportional zu der Flüssigkeitsmenge in dem Behälter ist,

Mitteln (2) zum Zirkulierenlassen eines bestimmten Stromes (I) in jedem Widerstand (15, 15') und

Mitteln (3) zum Verarbeiten der Spannungsunterschiede zwischen jedem ersten Anschluß (11, 11') und jedem dritten Anschluß (13, 13') und zum Liefern eines einzigen Meßsignals (S), das charakteristisch für die gemessene gesamte Flüssigkeitsmenge ist,

wobei die Vorrichtung dadurch gekennzeichnet ist, daß:

die Mittel zum Zirkulierenlassen eines Stromes eine einzelne Stromquelle (2) aufweisen, die einen ersten Anschluß (29) aufweist, der ebenso wie der zweite Anschluß (12) des ersten Potentiometers (1) mit einer elektrischen Masse verbunden ist, und einen zweiten Anschluß (28) aufweist, der mit dem zweiten Anschluß (12') des zweiten Potentiometers (1') verbunden ist, wobei die beiden ersten Anschlüsse (11, 11') der beiden Potentiometer miteinander verbunden sind, und

die Mittel (3) zum Verarbeiten der Spannungsunterschiede und zum Liefern des Meßsignals (S) eine Schaltung für die Umwandlung (31) des Spannungsunterschiedes zwischen den beiden dritten Anschlüssen (13, 13') der beiden Potentiometer (1, 1') aufweisen.

2. Vorrichtung nach Anspruch 1, bei welcher die Umwandlungsschaltung (31) mit einem dissymmetrischen Eingang zwischen einem Eingangsanschluß (311) und einem Referenzanschluß (310) versehen ist, dessen Spannung als Referenz für die Versorgung der Umwandlungsschaltung (31) mit elektrischer Energie dient, wobei der Eingangsanschluß (311) mit dem dritten Anschluß (31') des zweiten Potentiometers (1') verbunden ist und der Referenzanschluß (310) mit dem dritten Anschluß (13) des ersten Potentiometers (1) durch Vermittlung von einer Verfolgerschaltung (32) verbunden ist.

3. Vorrichtung nach Anspruch 2, bei welcher die Umwandlungsschaltung (31) mit elektrischer Energie durch Vermittlung einer Spannungsreglerschaltung (4') versorgt wird, die mit einem Eingang mit zwei Anschlüssen, von denen der eine (40') mit der Masse und der andere (41') mit einem Anschluß einer elektrischen Energiequelle (5) verbunden ist, deren anderer Anschluß mit der Masse verbunden ist, und einem Ausgang mit zwei Anschlüssen (48', 49') versehen ist, von denen der eine (49') mit dem Referenzanschluß (310) der Umwandlungsschaltung (31) und der andere (48') mit dem Speiseanschluß (315) der Umwandlungsschaltung (31) verbunden ist.

4. Vorrichtung nach einem der Ansprüche 1 bis 3, bei welcher ein erster Kondensator (6) zwischen den beiden dritten Anschlüssen (13, 13') der beiden Potentiometer (1, 1') angeordnet ist und ein zweiter Kondensator (7) zwischen dem dritten Anschluß (13) des ersten Potentiometers (1) und der Masse angeordnet ist.

**Claims**

1. Device for measuring the total quantity of liquid contained in two reservoirs, comprising: a first potentiometer (1) and a second potentiometer (1'), namely, in each reservoir, a respective potentiometer (1, 1') comprising a resistance (15, 15') provided with a first terminal (11, 11') connected to one of the two ends of the resistance (15, 15'), with a second terminal (12, 12') connected to the other end of the resistance (15, 15') and with a third terminal (13, 13') connected to the slide of the potentiometer (1, 1'), the said slide being integral with a float and the arrangement being such that the value of the portion of the resistance between said first terminal (11, 11') and said third terminal (13, 13') is proportional to the quantity of liquid in said reservoir.

means (2) for causing a predetermined current (I) to circulate in each resistance (15, 15'), and

means (3) for processing the potential differences between each said first terminal (11, 11') and each said third terminal (13, 13') and for supplying a single measuring signal (S) representative of the total quantity of liquid measured,

device characterised by the fact that:

the said means for causing a current to circulate comprise a single current source (2) provided with a first terminal (29) connected to an electric earth as well as to the second terminal (12) of the first potentiometer (1), and with a second terminal (28) connected to the second terminal (12') of the second potentiometer (1'), the two first terminals (11, 11') of the two potentiometers being connected to each other, and

the said means (3) for processing the potential differences and for supplying said measuring signal (S) comprise a circuit (31) for the conversion of the potential difference between the two third terminals (13, 13') of the two potentiometers (1, 1').

2. Device according to Claim 1, in which said conversion circuit (31) is provided with an input access of asymmetrical type between an input terminal (311) and a reference terminal (310) whereof the potential serves as a reference for the supply of electrical energy to the conversion circuit (31), said input terminal (311) is connected to the third terminal (13') of the second potentiometer (1') and said reference terminal (310) is connected to the third terminal (13) of the first potentiometer (1) through the intermediary of a follower circuit (32).

3. Device according to Claim 2, in which said conversion circuit (31) is supplied with electrical energy through the intermediary of a voltage regulator circuit (4') provided with an input access with two terminals, whereof one (40') is connected to said earth and the other (41') to one terminal of an electrical power source (5), whereof the other terminal is connected to said earth, and with an output access comprising two terminals (48', 49'), whereof one (49') is connected to said reference terminal (310) of the conversion circuit (31) and the other (48') is connected to the supply terminal (315) of the conversion circuit (31).

4. Device according to one of Claims 1 to 3, in which a first capacitor (6) is connected between the two third terminals (13, 13') of the two potentiometers (1, 1') and a second capacitor (7) is connected between the third terminal (13) of the first potentiometer (1) and said earth.